Europäisches Patentamt

European Patent Office

Office européen des brevets

(19)

(11) Veröffentlichungsnummer: **0 196 553**

**A1**

# (12) EUROPÄISCHE PATENTANMELDUNG

(21) Anmeldenummer: **86103729.9**

(22) Anmeldetag: **19.03.86**

(51) Int. Cl.⁴: **E 04 B 1/94**
 **E 04 B 1/92**

(30) Priorität: **29.03.85 CH 1385/85**

(43) Veröffentlichungstag der Anmeldung:
 **08.10.86 Patentblatt 86/41**

(84) Benannte Vertragsstaaten:
 **BE CH DE FR GB LI NL**

(71) Anmelder: **FIBRACONSULT MANAGEMENT UND BERATUNGS AG**
 **Niklaus-Konrad-Strasse 25**
 **CH-4500 Solothurn(CH)**

(72) Erfinder: **Kalbskopf, Reinhard, Dr.**
 **Birkenweg 434**
 **CH-4803 Vordemwald(CH)**

(74) Vertreter: **EGLI-EUROPEAN PATENT ATTORNEYS**
 **Horneggstrasse 4**
 **CH-8008 Zürich(CH)**

(54) **Mineralfaserplatte.**

(57) Die Platte enthält neben Mineralfasern, Füllstoff und Bindemittel einen Wirkstoff, der die Entwicklung von Kohlenmonoxid im Falle einer themischen Zersetzung des Bindemittels vermindert. Dieser Wirkstoff kann eine Borverbindund sein. Unter diesen hat sich Colemanit als am wirksamsten erwiesen.

Bei einer allfälligen thermischen Zerstörung der vorliegenden Mineralfaserplatte wird die Entwicklung von Kohlenmonoxid wirksam gehemmt.

EP 0 196 553 A1

Platte

Die vorliegende Erfindung betrifft eine Platte, die Fasern enthält, welche mit Hilfe eines Mittels untereinander gebunden sind, das bei thermischer Zersetzung unter anderem Kohlenmonoxid abspaltet.

Eine typische Platte dieser Art weist beispielsweise die folgende Zusammensetzung auf:
73 Gew.% Schlackenwolle,
21 Gew.% Ton und
 6 Gew.% Stärke.

Solche Platten werden, mit dekorativen Oberflächen versehen, in abgehängten Decken oder Wandpaneelen vorwiegend zur akustischen Isolation von Räumen eingestezt. Sie finden jedoch auch Verwendung im baulichen Brandschutz, insbesondere als Türfüllungen und Verkleidungen von Trägern und Stützen bei Stahlkonstruktionen sowie von Lüftungs- und E-Leitungskanälen.

Die genannten Platten werden in einem sogenannten Nassverfahren hergestellt. Dabei wird eine stark wässrige Aufschlämmung von Mineralwolle, Stärke und Ton bereitgestellt, welcher auf einem Sieb durch Abnutschen ein Teil des Wassers entzogen wird. Der so entstandene Siebkuchen wird dann in einen Ofen geführt, in wechem das Restwasser bei erhöhter Temperatur verdampft. Zugleich erhärtet der Stärkegel durch Trocknung und stellt dabei eine feste Verbindung zwischen den sich kreuzenden Fasern her.

Der Vorteil der Stärke als Bindemittel beruht auf der Möglichkeit, sie durch Fällung mittels Hilfsreagenzien genau an die Stellen im Mineralfaserfilz zu bringen, an welchen sie in wirkungsvollster Weise eine Bindung zwischen den Fasern herstellen kann, nämlich an deren Berührungspunkten. Der Nachteil der Stärke beruht darin, dass sie bei thermischer Zersetzung der Platte giftige Rauchgase, vor allem Kohlenmonoxid, abspaltet. Dies kann dann der Fall sein, wenn die Platte während längerer Zeit einer Temperatur oberhalb von 250 Grad C ausgesetzt wird, etwa während eines Gebäudebrandes.

Es gibt Normen, welche die maximal zulässige Menge von giftigen Rauchgasen bei der Verbrennung solcher Platten festlegen. Um den Normen zu genügen, wird üblicherweise die Menge von Stärke als Bindemittel für die Mineralfasern reduziert. Hierdurch wird jedoch die mechanische Festigkeit der Platte vermindert, sodass die Be- bzw. Verarbeitbarkeit, z.B. bei der Montage, stark abnimmt. Der Gehalt der Platte an Stärkebinder kann deshalb nicht so weit abgesenkt werden als es zur Verminderung des Gehaltes an Kohlenmonoxid in den Rauchgasen wünschenswert wäre.

Aus US-PS 4 370 249 ist ein Fasern enthaltendes Material bekannt, wobei die Fasern aus Zellulose sind. Zellulosefasern sind bekanntlich leicht entflammbar. Um die Entflammbarkeit dieses Materials herabzusetzen, wird dem Rohstoff, aus dem das Material hergestellt werden soll, Talk zugesetzt. Die Entflammbarkeit dieses Materials kann weiter herabgesetzt werden, wenn zudem noch Borverbindungen beigemischt werden.

Das genannte Material enthält keine Stärke und es wird in einem sogenannten Trockenverfahren zubereitet. Es enthält in jedem Fall Talk. Talk und Borverbindungen hemmen bloss die Entflammbarkeit von Zellulose. Dies bedeutet, dass diese Zusätze wirksam sind, bevor die Entwicklung von giftigen Rauchgasen beginnt. Aus der genannten US-Patentschrift ist es nicht bekannt, dass sich einer dieser Zusätze oder die beiden Zusätze zusammen auf die Rauchentwicklung hemmend auswirken könnten.

Die Aufgabe der vorliegenden Erfindung ist es, eine Platte
anzugeben, welche bei thermischer Zersetzung eine möglichst
kleine Menge von Giftstoffen entwickelt und die zugleich
sehr gute mechanische Eigenschaften aufweist.

Diese Aufgabe wird bei der Platte der eingangs genannten
Art erfindungsgemäss so gelöst, wie dies im kennzeichnenden
Teil des Anspruchs 1 definiert ist.

Nachstehend werden Ausführungsbeispiele der vorliegenden
Erfindung näher erläutert.

Faserplatten, wie sie für die genannte Anwendung in Frage
kommen, enthalten in der Regel 50 bis 90 Gew.% Mineralfasern, 10 bis 30 Gew.% Füllstoffe und 3 bis 10 Gew.% organische Bindemittel, welche bei thermischer Zersetzung unter
anderem Kohlenmonoxid abspalten, sowie gegebenenfalls noch
weitere Hilfsstoffe. Schlackenwolle kann die genannten
Mineralfaser-Komponente darstellen. Als Füllstoffe kommen
bei solchen Mineralfaserplatten Tone, Perlit, Kaolin oder
Kalziumkarbonat in Frage. Als organisches Bindemittel
verwendet man Stärke, meist Mais- oder Kartoffelstärke. Die
besten Resultate erzielt man im vorliegenden Fall bei
Verwendung von kationischer Maisstärke.

Die Idee der vorliegenden Erfindung beruht darin, dass der
Platte während des Herstellungsprozesses ein Wirkstoff
beigegeben wird, welcher im Fall einer thermischen Belastung der Platte auf Temperaturen über 250 Grad C die pyrolytische Reaktion solcherart steuert, dass der Gehalt an
Kohlenmonoxid in den entstehenden Brand- oder Schwelgasen
sehr stark reduziert wird.

Ueberraschenderweise ist festgestellt worden, dass Borverbindungen die für die Lösung der vorstehend genannten
Aufgabe erforderlichen Eigenschaften aufweisen. Unter den
Borverbindungen erwies sich Colemanit als besonders geeignet. Es ist ferner festgestellt worden, dass noch weitere Stoffe zu diesem Zweck verwendet werden können, z.B.
Zinkborat. Jedoch zeigt dieses nicht die gleich hohe Wirksamkeit.

Mineralfaserplatten, die einen, die Entstehung von Giftgasen hemmenden Wirkstoff enthalten, können beispielsweise
die folgenden Komponenten enthalten:
50 bis 90 Gew.% Mineralfasern,
10 bis 30 Gew.% Füllstoffe,
 3 bis 10 Gew.% organisches Bindemittel und
  den Wirkstoff in einer Menge, die 10 bis 50 % der Kohlen
monoxid abspaltenden Komponente entspricht.

Die Menge des genannten Wirkstoffes soll auf die Menge des
verwendeten Bindemittels abgestimmt sein, da ja die Menge
der bei einer thermischen Zersetzung des Bindemittels entstandenen Giftgase von der Menge des Bindemittels abhängt.
Aus diesem Grund ist die vorstehend angegebene Menge von
Wirkstoff als prozentualer Anteil der Bindemittelmenge angegeben.

Als besonders vorteilhaft erwies es sich, den Wirkstoff in
fein verteilter Form, etwa zu Pulver gemahlen, in die Platte einzubringen. Dadurch wird eine gleichmässige Verteilung
und höhere Reaktionsausbeute erreicht.

Eine typische Mineralfaserplatte, bei deren Verbrennen oder
Schwelen die Entwicklung von Giftgasen stark unterbunden
ist, kann die folgende Zusammensetzung aufweisen:
73 Gew.% Schlackenwolle,
21 Gew.% Ton, 5 Gew.% Maisstärke und
1 Gew.% Wirkstoff.

Die nachstehende Tabelle soll die Entwicklung von Kohlenmonoxid im Rauchgas bei Zusatz verschiedener Wirkstoffe
zeigen. Die Menge von entstandenem Kohlenmonoxid wurde
gemäss DIN 53 436 gemessen und wird in der nachstehenden
Tabelle in Volumen-% angegeben.

| Aluminiumhydroxid | $Al(OH)_3$ | 0,09 Vol% CO |
|---|---|---|
| Zinkborat | $Zn_2(B_6O_{11}) \cdot 3,5\ H_2O$ | 0,06 Vol% CO |
| Ammoniumpolyphosphat | $NH_4(PO_3)_n$ | 0,07 Vol% CO |
| Colemanit | $Ca_2(B_6O_{11}) \cdot 5\ H_2O$ | 0,03 Vol% CO |
| Vergleichsprobe | ohne Zusatz | 0,07 Vol% CO |

Aus dieser Tabelle ist ersichtlich, dass Colemanit der
wirksamste der genannten Stoffe ist. Aus der nachstehenden
Tabelle ist die Wirksamkeit von Colemanit in Abhängikeit
von der Dosierung dargestellt.

| 1. Stärkegehalt Gew % | 3,0 | 3,0 | 3,0 | 5,0 | 5,0 | 5,0 | 10,0 | 10,0 | 10,0 |
|---|---|---|---|---|---|---|---|---|---|
| 2. Colemanit Gew % | 0,3 | 1,0 | 1,5 | 0,5 | 1,5 | 2,5 | 1,0 | 3,0 | 5,0 |
| % von 1) | 10 | 30 | 50 | 10 | 30 | 50 | 10 | 30 | 50 |
| Kohlenmonoxid Vol % | 0,03 | 0,02 | 0,02 | 0,05 | 0,03 | 0,03 | 0,13 | 0,10 | 0,09 |
| CO-Entwicklung, ohne Zusatz Vol % | 0,04 | | | 0,07 | | | 0,15 | | |

Die vorliegende Mineralfaserplatte wird in dem hier einleitend beschriebenen Nassverfahren hergestellt. Der Wirkstoff wird der Aufschlämmung beigegeben, damit er überall
dort ist, wo sich auch Stärke befindet. Hieraus ergibt sich
eine weitere wichtige Anforderung an den Wirkstoff, nämlich, dass er nicht wasserlöslich sein darf. Denn wenn dieser Stoff wasserlöslich wäre, dann würde er der Aufschlemmung auf dem Sieb entzogen. Wenn der Wirkstoff nicht wasserlöslich ist, bleibt er, gleich wie Stärke und die Füllstoffe im Mineralfaserfilz zurück, auch nachdem diesem
Wasser entzogen worden ist. Im Behandlungsofen, in dem
Stärke zum Bindemittel des Mineralfaserfilzes wird, bleibt
der Wirkstoff auch noch unverändert. Erst während einer
allfälligen thermischen Zersetzung des Bindemittels wird
der genannten Stoff wirksam und beeinflusst die pyrolytische Zersetzungsreaktion der Stärke in der gewünschten
Weise. Es wird vermutet, dass es sich um eine, zum Teil
katalytische Wechselwirkung zwischen dem Wirkstoff und der
Stärke handelt. Die Entstehung von Kohlenmonoxid wird dabei
unterdrückt zu Gunsten von Kohlendioxid.

Im Zusammenhang mit der US-PS 4 370 249 ist darauf hinzuweisen, dass zum Stand der Technik die Verwendung von noch
weiteren flammhemmenden Zusätzen gehört. Als solche Zusätze
werden beispielsweise Aluminiumhydroxid, Aluminiumpolyphosphat, Arsentrioxid, Zinkborat oder dgl. empfohlen und auch
verwendet. Solche Zusätze hemmen die Flammentwicklung und
verkürzen allenfalls die Brenndauer eines Materials. Tatsächlich unterdrücken die flammhemmenden Zusätze die Verbrennungsreaktion, also die Oxidation zu Kohlendioxid, und
können deshalb unter Umständen den Gehalt an Kohlenmonoxid
in den Rauchgasen sogar erhöhen.

Im vorliegenden Fall können die Brenndauer, Flammentwicklung usw. durch den hinzugefügten Wirkstoff unbeeinflusst
bleiben, denn im vorliegenden Fall geht es vor allem darum,
die Entwicklung von giftigen Rauchgasen zu vermindern.

Patentansprüche

1. Platte, die Fasern enthält, welche mit Hilfe eines Mittels untereinander gebunden sind, das bei thermischer Zersetzung unter anderem Kohlenmonoxid abspaltet, dadurch gekennzeichnet, dass die Fasern Mineralfasern sind und dass die Platte einen Wirkstoff enthält, der wasserunlöslich ist und der die Entwicklung von Kohlenmonoxid im Falle einer thermischen Zersetzung der Platte vermindert.

2. Platte nach Anspruch 1, dadurch gekennzeichnet, dass der Wirkstoff eine Borverbindung ist.

3. Platte nach Anspruch 2, dadurch gekennzeichnet, dass der Wirkstoff Colemanit ist.

4. Platte nach Anspruch 1, dadurch gekennzeichnet, dass die Menge des Wirkstoffes 10 bis 50 % derjenigen Komponenten der Platte ausmacht, die Kohlenmonoxid abspalten können.

5. Platte nach Anspruch 4, dadurch gekennzeichnet, dass sie
50 bis 90 Gew.% Mineralfasern,
10 bis 30 Gew.% Füllstoffe,
 3 bis 10 Gew.% organisches Bindemittel und
 den Wirkstoff in einer Menge enthält, die 10 bis 50 % der Kohlenmonoxid abspaltenden Komponente entspricht.

6. Platte nach Anspruch 5, dadurch gekennzeichnet, dass sie
73 Gew.% Schlackenwolle,
21 Gew.% Ton,
 5 Gew.% organisches Bindemittel und
 1 Gew.% Wirkstoff enthält.

7. Platte nach Anspruch 5, dadurch gekennzeichnet, dass die Füllstoffe Ton, Perlit, Kaolin oder Kalziumkarbonat sind.

8. Platte nach Anspruch 1, dadurch gekennzeichnet, dass als Bindemittel Stärke, insbesondere kationische Stärke, dient.

9. Platte nach Anspruch 1, dadurch gekennzeichnet, dass der Wirkstoff die Entwicklung von Kohlenmonoxid um mindestens 50 Vol.% vermindert.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y,D | US-A-4 370 249  (BIRD et al.)<br><br>* Spalte 3, Zeilen 57-65; Spalte 4, Zeilen 45-56 * | 1,2,4, 5,7,8 | E 04 B    1/94<br>E 04 B    1/92 |
| A | | 9 | |
| | --- | | |
| Y | GB-A-2 141 456  (THERMO ACOUSTIC PRODUCTS LTD.)<br>* Seite 1, Zeilen 7-10,30-32; Tabelle 1 * | 1,2,4, 5,7,8 | |
| | --- | | |
| A | JP-A-58 004 054<br>* Insgesamt * | 1 | |
| | --- | | |
| A | CH-A-  472 275  (STATE OF ISRAEL, MINISTRY OF TRADE AND INDUSTRY)<br>* Spalte 4, Zeilen 52-60 * | 3 | RECHERCHIERTE SACHGEBIETE (Int Cl 4) |
| | --- | | E 04 B<br>E 04 C |
| A | GB-A-1 344 715  (KARLHOLMS AB)<br><br>* Seite 1, Zeilen 21-26; Seite 2, Zeilen 21,30-32; Beispiel 1 * | 1,2,5- 7 | B 27 K<br>A 62 D |
| | --- | | |
| A | US-A-3 518 156  (WINDECKER)<br>* Spalte 1, Zeilen 35-42,58-60 * | 1 | |
| | ----- | | |

Der vorliegende Recherchenbericht wurde für alle Patentansprüche erstellt

| Recherchenort<br>DEN HAAG | Abschlußdatum der Recherche<br>27-06-1986 | Prüfer<br>ASHLEY G.W. |
|---|---|---|